# EUROPÄISCHE PATENTSCHRIFT

(11) **EP 1 059 221 B1**
(45) Veröffentlichungstag und Bekanntmachung des Hinweises auf die Patenterteilung: **25.05.2005**
(21) Anmeldenummer: 00110014.8
(22) Anmeldetag: 12.05.2000
(51) Int. Cl.: B62D 25/14

(54) **Cockpitquerträger in einem Kraftfahrzeug**
Crossbar for a dashboard of a motor vehicle
Traverse de renfort de tableau de bord pour véhicule automobile

(30) Priorität: 11.06.1999 DE 19926636
(43) Veröffentlichungstag der Anmeldung: 13.12.2000
(73) Patentinhaber: Dr.Ing. h.c.F. Porsche Aktiengesellschaft, 70435 Stuttgart (DE)
(72) Erfinder: Götz, Erwin, 71263 Weil Der Stadt (DE)

(56) Entgegenhaltungen:
- DE-A- 19 715 069
- FR-A- 2 667 038
- US-A- 5 934 733

## Beschreibung

Die Erfindung bezieht sich auf einen Cockpitquerträger in einem Kraftfahrzeug gemäß dem Oberbegriff des Patentanspruchs 1.

Aus der FR 2 667 038 A1 geht ein Cockpitquerträger für ein Kraftfahrzeug hervor, der sich aus einem querverlaufenden rohrartigen Grundträger, zumindest einem mit diesem verbundenen Halteelement zur Anbindung von Fahrzeugfunktionselementen und seitlichen Befestigungskonsolen zusammensetzt. Das zumindest eine Halteelement und die Befestigungskonsolen sind mit dem Grundträger verschweißt. Aufgrund der Vielzahl von Schweißnähten weist ein derartiger Cockpitquerträger einen relativ aufwendigen Aufbau auf. Ferner ist es schwierig, geringe Toleranzen zu den angrenzenden Aufbauteilen einzuhalten. Aufgrund der stumpf aufgesetzten seitlichen Befestigungskonsolen eignet sich ein derartiges Cockpitquerträgersystem nur für einen einzigen Fahrzeugtyp mit einer definierten Innenraumbreite.

Die gattungsbildende WO 99/10219 offenbart einen Cockpitquerträger in einem Kraftfahrzeug, der im Vorbau auf Höhe einer Instrumententafel in Fahrzeugquerrichtung ausgerichtet mit je einem Ende an gegenüberliegenden Aufbauteilen des Kraftfahrzeuges festgelegt ist, wobei der Cockpitquerträger einen vierkantrohrartigen Grundträger definierter Länge umfasst, auf den ein oder mehrere Halteelemente zur Anbringung von Fahrzeugfunktionselementen wie Lenksäule, Beifahrerairbag oder dgl. und die beiden seitlichen Befestigungskonsolen aufschiebbar und in der vorgesehenen Position festlegbar sind. Die Halteelemente und die Befestigungskonsolen umschließen den Grundträger bereichsweise nahezu vollständig.

Bei dieser Anordnung sind die aufgeschobenen Halteelemente durch Hydroforming des Grundträgers an diesem befestigt.

Aus der DE 297 06 371 U ist es bekannt, bereichsweise auf einen Grundträger eines Cockpitquerträgers aufgesetzte Halteelemente in der vorgewählten Position durch Schweißung zu befestigen.

Aufgabe der Erfindung ist es, einen Cockpitquerträger so weiterzuentwickeln, dass er bei einfachem Aufbau für mehrere Fahrzeuge einer Fahrzeugfamilie mit unterschiedlichen Innenraumbreiten einsetzbar ist und dass ferner relativ große Toleranzen ausgleichbar sind. Darüber hinaus sollen die Halteelemente und die Befestigungskonsolen einstellbar am Grundträger festlegbar sein.

Gelöst wird diese Aufgabe durch die Merkmale des Anspruchs 1. Weitere, die Erfindung in vorteilhafter Weise ausgestaltende Merkmale enthalten die Unteransprüche.

Die mit der Erfindung hauptsächlich erzielten Vorteile sind darin zu sehen, dass das erfindungsgemäße Cockpitquerträgersystem universell einsetzbar ist und sich schnell und einfach fertigen und montieren lässt.

Das Cockpitquerträgersystem umfaßt einen rohrförmigen Grundträger definierter Länge, auf den ein oder mehrere Halteelemente zur Anbindung von Fahrzeugfunktionselementen und seitlich außenliegende Befestigungskonsolen aufschiebbar sind, wobei die Halteelemente und die Befestigungskonsolen den Grundträger nahezu vollständig umschließen und in der jeweils gewünschten Position mittels Klemmbefestigungen festlegbar sind. Mit einem Minimum an Bauteilen lassen sich somit in einer Vielzahl von Fahrzeugen unterschiedlicher Innenraumbreite einsetzbare Cockpitquerträger herstellen.

Ein Ausführungsbeispiel der Erfindung ist in der Zeichnung dargestellt und wird im folgenden näher erläutert.

Es zeigen
- Fig. 1: eine perspektivische Ansicht des erfindungsgemäßen Cockpitquerträgers mit den angrenzenden Aufbauteilen,
- Fig. 2: einen Schnitt nach der Linie II- II der Fig. 1,
- Fig. 3: einen Schnitt nach der Linie III-III der Fig. 1 und
- Fig. 4: eine perspektivische Ansicht auf eine äußere Befestigungskonsole für den Cockpitquerträger.

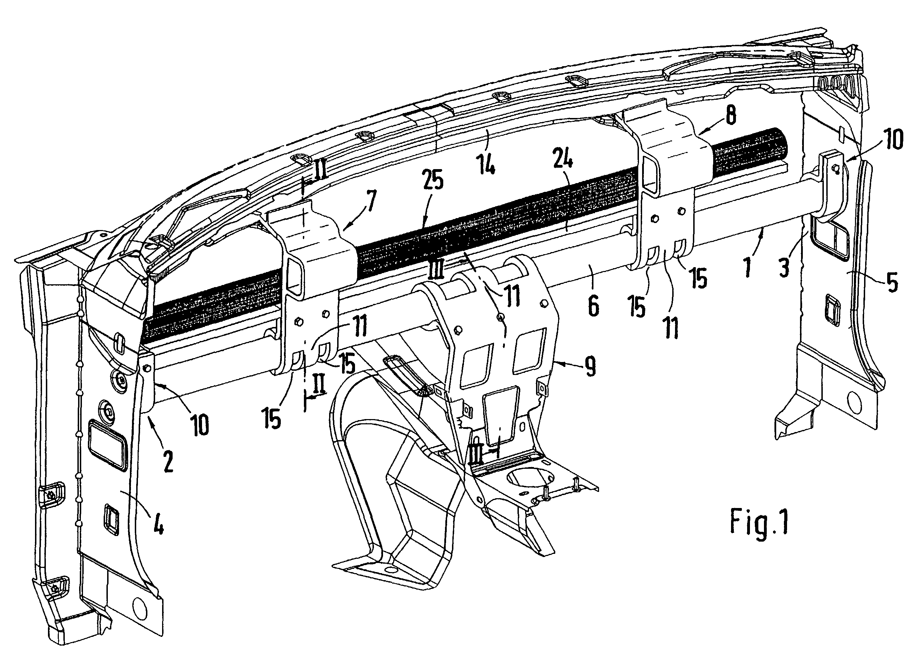

Figur 1 zeigt einen Cockpitquerträger 1 in einem nicht näher dargestellten Kraftfahrzeug, der im Vorbau auf Höhe einer Instrumententafel in Fahrzeugquerrichtung ausgerichtet mit je einem Ende 2 bzw. 3 an den gegenüberliegenden Aufbauteilen 4, 5 des Kraftfahrzeuges, z.B. durch eine Verschraubung festgelegt ist.

Im Ausführungsbeispiel werden die Aufbauteile 4, 5 durch gegenüberliegende, aufrechte A-Säulen des Kraftfahrzeuges gebildet. Der Cockpitquerträger 1 umfaßt einen querverlaufenden, rohrartigen Grundträger 6, an dem wenigstens ein Halteelement 7, 8, 9 zur Anbringung von Fahrzeugfunktionselementen und seitliche Befestigungskonsolen 10 angebracht sind.

Der vorzugsweise einen kreisringförmigen Querschnitt aufweisende Grundträger 6 aus Stahl oder einer Leichtmetallegierung wird für unterschiedliche Fahrzeuge einer Fahrzeugfamilie jeweils auf die entsprechende Länge abgelängt.

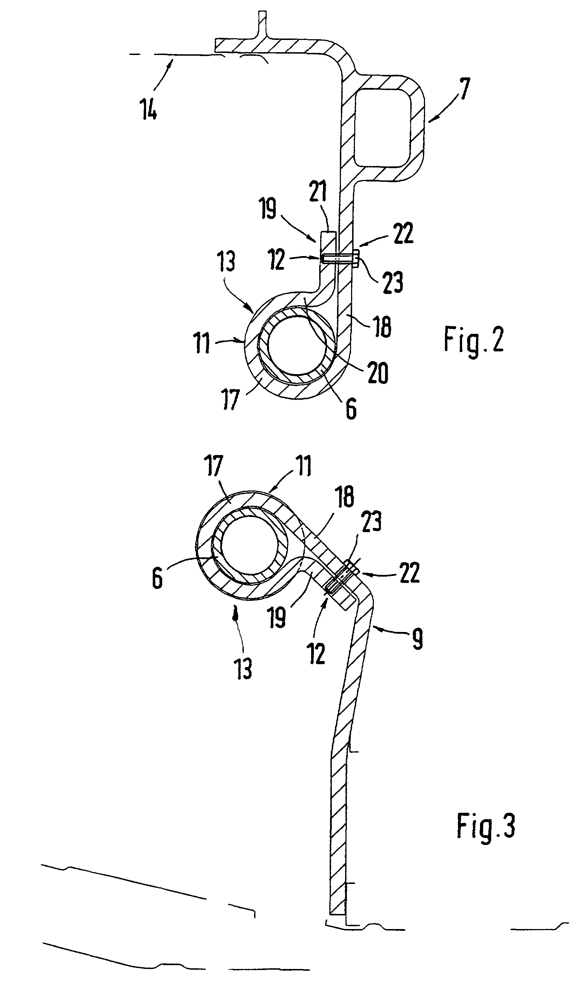

Erfindungsgemäß weisen das wenigstens eine Halteelement 7, 8, 9 und die beiden seitlichen Befestigungskonsolen 10 jeweils eine querverlaufende Aufnahme 11 zum nahezu vollständigen Umschließen des innenliegenden Grundträgers 6 auf, wobei die auf den Grundträger 6 von der Seite her aufgeschobenen Halteelemente 7, 8, 9 und Befestigungskonsolen 10 über lösbare Klemmbefestigungen 12 am Grundträger 6 festlegbar sind (Fig.2 und 3).

Die querverlaufenden Aufnahmen 11 sind an den dem Grundträger 6 zugewandten Endbereichen 13 der Halteelemente 7, 8, 9 bzw. der Befestigungskonsolen 10 ausgebildet und vorzugsweise einstückig mit den genannten Bauteilen ausgebildet. Die Halteelemente 7, 8, 9 und Befestigungskonsolen 10 können durch Blechteile, Strangpreßprofile oder dgl. gebildet werden. Der Grundträger 6 kann entlang seiner Längserstreckung einen gleichbleibenden Querschnitt oder einen unterschiedlichen Querschnitt (z.B. durch Innenhochdruckumformverfahren) aufweisen.

Im Ausführungsbeispiel ist ein erstes Halteelement 7 zur Anbindung einer Lenksäule, ein zweites Halteelement 8 für einen Beifahrerairbag und ein drittes Halteelement 9 zur Anbindung an den Boden oder den Mitteltunnel der Fahrzeugkarosserie vorgesehen. Die beiden nach oben ragenden Halteelemente 7, 8 sind mit ihren oberen Enden an einen aufbauseitig feststehenden Querträger 14 (Windlauf) angeschlossen und an diesem befestigbar. Jede querverlaufende Aufnahme 11 kann örtlich ausgesparte Bereiche 15 aufweisen.

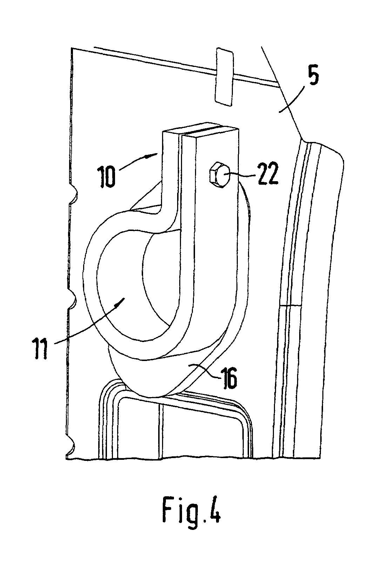

Jede Befestigungskonsole 10 setzt sich aus einer querverlaufenden zur Fahrzeugmitte hin offenen Aufnahme 11 und einer äußeren Befestigungsplatte 16 zusammen, wobei an jeder Befestigungsplatte 16 Durchgangsbohrungen zum Hindurchführen von querverlaufenden, nicht näher dargestellten Befestigungsschrauben ausgebildet sind (Fig. 4).

Die querverlaufenden Aufnahmen 11 der Befestigungskonsolen 10 nehmen jeweils einen seitlich außenliegenden Randbereich des Grundträgers 6 auf, wobei zwischen der Aufnahme 11 und dem Randbereich des Grundträgers 6 eine Überlappung in Fahrzeugquerrichtung erfolgt. Durch unterschiedliche Überlappung können Toleranzen in Fahrzeugquerrichtung kompensiert werden.

Jede querverlaufende Aufnahme 11 setzt sich - im Querschnitt gesehen - aus einem Kreisabschnitt 17 von etwa 270° und zwei an den Kreisabschnitt 17 angeschlossene Flansche 18, 19 zusammen, die abschnittsweise parallel und mit geringem Abstand zueinander verlaufen. Ein erster geradliniger Flansch 18 ist tangential an ein Ende des Kreisabschnitts 17 angeschlossen, wogegen der zweite Flansch 19 etwa L-förmig ausgebildet ist. Der kürzere Schenkel 20 des L-förmigen Flansches 19 ist an das andere Ende des Kreisabschnitts 17 angebunden, wogegen der längere Schenkel 21 parallel und mit Abstand zum anderen geradlinien Flansch 18 verläuft. Beide Flansche 18, 19 werden mittels zumindest einer Klemmschraube 22 derart gegeneinander gespannt, daß eine Klemmung der Aufnahme 11 am Grundträger 6 erfolgt.

Am L-förmigen Flansch 19 ist ein Innengewinde vorgesehen, in das ein Gewindeabschnitt der Klemmschraube 22 vom Fahrgastraum her eindrehbar ist. Der Kopf 23 der Klemmschraube 22 stützt sich am anderen Flansch 18 ab. Die Halteelemente 7, 8, 9 sind in Fahrzeugquerrichtung A-A auf dem Grundträger 6 verschiebbar und zusätzlich um diesen schwenkbar. Ein derartiges Cockpitquerträgersystem ist für eine Vielzahl von unterschiedlichen Fahrzeuge einsetzbar. An den beiden Halteelementen 7, 8 ist ferner eine querverlaufende profilierte Schiene 24 festlegbar, die einen Kabelstrang 25 aufnimmt.

## Patentansprüche

1. Cockpitquerträger in einem Kraftfahrzeug, der im Vorbau auf Höhe einer Instrumententafel in Fahrzeugquerrichtung ausgerichtet mit je einem Ende an gegenüberliegenden Aufbauteilen des Kraftfahrzeuges festgelegt ist, wobei der Cockpitquerträger einen rohrartigen Grundträger definierter Länge umfasst, auf den ein oder mehrere Halteelemente zur Anbringung von Fahrzeugfunktionselementen wie Lenksäule, Beifahrerairbag oder dgl. und die beiden seitlichen Befestigungskonsolen aufschiebbar und in der vorgesehenen Position festlegbar sind, wobei die Halteelemente und die Befestigungskonsolen den Grundträger bereichsweise nahezu vollständig umschließen, **dadurch gekennzeichnet, dass** die Halteelemente (7, 8, 9) und die Befestigungskonsolen (10) mittels lösbarer Klemmbefestigungen (12) am Grundträger (16) festlegbar sind und dass der Grundträger (6) einen kreisringförmigen Querschnitt aufweist.

2. Cockpitquerträger nach Anspruch 1, **dadurch gekennzeichnet, dass** das erste und zweite Halteelement (7, 8) identisch ausgebildet sind.

3. Cockpitquerträger nach den Ansprüchen 1 und 2, **dadurch gekennzeichnet, dass** das erste und das zweite Halteelement (7, 8) zusätzlich an einen karosseriefesten oberen Windlaufquerträger (14) angebunden und an diesem befestigt sind.

4. Cockpitquerträger nach Anspruch 1, **dadurch gekennzeichnet, dass** auf den Grundträger (6) ein weiteres Halteelement (9) aufschiebbar ist, das mit seinem anderen Ende an den Boden oder einen Längstunnel der Fahrzeugkarosserie angeschlossen ist.

5. Cockpitquerträger nach einem der vorangegangenen Ansprüche, **dadurch gekennzeichnet, dass** die Halteelemente (7, 8, 9) und die Befestigungskonsolen (10) querverlaufende Aufnahmen (11) aufweisen, die einstückig mit den Halteelementen (7, 8, 9) bzw. den Befestigungskonsolen (10) ausgebildet sind.

6. Cockpitquerträger nach einem der vorangegangenen Ansprüche, **dadurch gekennzeichnet, dass** zumindest die an den Halteelementen (7, 8, 9) vorgesehenen Aufnahmen (11) örtlich ausgesparte Bereiche (15) aufweisen.

7. Cockpitquerträger nach einem der vorangegangenen Ansprüche, **dadurch gekennzeichnet, dass** jede Aufnahme (11) einen den Grundträger (6) umgebenden Kreisringabschnitt (17) aufweist, wobei von beiden Enden des Kreisringabschnitts (17) Flansche (18, 19) weggeführt sind, die bereichsweise parallel und mit geringem Abstand zueinander verlaufen und dass die beiden Flansche (18, 19) mittels zumindest einer Klemmschraube (22) gegeneinander gespannt werden.

8. Cockpitquerträger nach Anspruch 4, **dadurch gekennzeichnet, dass** das weitere Halteelement (9) zum Ein- und Ausbau eines Heiz-Klimagerätes in eine Freigabestellung hochschwenkbar ist.

## Claims

1. A cross member for a dashboard in a motor vehicle, which is orientated in the forward structure at the level of an instrument panel in the transverse direction of the vehicle and is fixed by one end in each case on opposite parts of the body of the motor vehicle, wherein the cross member for the dashboard comprises a tubular main support of defined length onto which it is possible to slide one or more holding elements for the attachment of functional elements of the vehicle, such as the steering column, the front-seat passenger's airbag or the like, and the two lateral fastening brackets and to fix them in the position provided, wherein the holding elements and the fastening brackets embrace the main support locally almost completely, **characterized in that** the holding elements (7, 8, 9) and the fastening brackets (10) can be fastened to the main support (6) by means of releasable clamping fastenings (12), and the main support (6) has an annular cross-section.

2. A cross member for a dashboard according to Claim 1, **characterized in that** the first and second holding elements (7, 8) are identical.

3. A cross member for a dashboard according to Claims 1 and 2, **characterized in that** the first and the second holding elements (7, 8) are additionally attached to an upper cowl cross member (14) rigid with the bodywork and are fastened to it.

4. A cross member for a dashboard according to Claim 1, **characterized in that** a further holding element (9), which is attached by its other end to the floor or a longitudinal tunnel of the vehicle bodywork, can be slid onto the main support (6).

5. A cross member for a dashboard according to one of the preceding Claims, **characterized in that** the holding elements (7, 8, 9) and the fastening brackets (10) have transversely extending receiving means (11) which are constructed in one piece with the holding elements (7, 8, 9) and the fastening brackets (10) respectively.

6. A cross member for a dashboard according to one of the preceding Claims, **characterized in that** at least the receiving means (11) provided on the holding elements (7, 8, 9) have regions (15) cut away locally.

7. A cross member for a dashboard according to one of the preceding Claims, **character** ized in that each receiving means (11) has an annular portion (17) surrounding the main support (6), wherein flanges (18, 19), which in part extend parallel and at a slight distance from each other, extend from both ends of the annular portion (17), and the two flanges (18, 19) are clamped against each other by means of at least one clamping screw (22).

8. A cross member for a dashboard according to Claim 4, **characterized in that** the further holding element (9) can be pivoted upwards into a release position in order to fit or remove a heater / air-conditioner appliance.

## Revendications

1. Traverse d'habitacle d'un véhicule automobile, qui est orientée à l'avant à hauteur d'un tableau de bord dans la direction transversale du véhicule et fixée par une extrémité à des parties opposées de la carrosserie du véhicule automobile, la traverse d'habitacle comprenant une poutre de base de type tubulaire de longueur définie sur laquelle peuvent être enfilés et fixés dans la position prévue un ou plusieurs éléments de retenue pour la fixation d'éléments fonctionnels du véhicule tels que la colonne de direction, un airbag passager ou similaire, ainsi que les deux consoles de fixation latérales, les éléments de retenue et les consoles de fixation enfermant presque totalement par endroits la poutre de base, **caractérisée en ce que** les éléments de retenue (7, 8, 9) et les consoles de fixation (10) peuvent être fixés sur la poutre de base (16) au moyen de fixations. par serrage (12) amovibles, et **en ce que** la poutre de base (6) présente une section transversale en forme d'anneau circulaire.

2. Traverse d'habitacle selon la revendication 1, **caractérisée en ce que** le premier et le deuxième élément de retenue (7, 8) sont réalisés à l'identique.

3. Traverse d'habitacle selon les revendications 1 et 2, **caractérisée en ce que** le premier et le deuxième élément de retenue (7, 8) sont attachés en outre à une arcade d'auvent (14) supérieure, solidaire de la carrosserie, et fixés à celle-ci.

4. Traverse d'habitacle selon la revendication 1, **caractérisée en ce que** sur la poutre de base (6) on peut enfiler un autre élément de retenue (9) qui est raccordé, par son autre extrémité, au plancher ou à un tunnel longitudinal de la carrosserie du véhicule.

5. Traverse d'habitacle selon l'une des revendications précédentes, **caractérisée en ce que** les éléments de retenue (7, 8, 9) et les consoles de fixation (10) présentent des logements (11) s'étendant transversalement qui sont réalisés d'un seul tenant avec les éléments de retenue (7, 8, 9) ou les consoles de fixation (10).

6. Traverse d'habitacle selon l'une des revendications précédentes, **caractérisée en ce qu'**au moins les logements (11), prévus sur les éléments de retenue (7, 8, 9), présentent des zones (15) découpées localement.

7. Traverse d'habitacle selon l'une des revendications précédentes, **caractérisée en ce que** chaque logement (11) présente un segment d'anneau circulaire (17) entourant la poutre de base (6), des deux extrémités du segment d'anneau circulaire (17) partant des brides (18, 19) qui s'étendent par endroits parallèlement et à faible distance l'une de l'autre, et **en ce que** les deux brides (18, 19) sont serrées l'une contre l'autre au moyen d'au moins une vis de serrage (22).

8. Traverse d'habitacle selon la revendication 4, **caractérisée en ce que** l'autre élément de retenue (9) peut pivoter vers le haut dans une position de déverrouillage, pour le montage et démontage d'un appareil de chauffage-climatisation.
